# EUROPÄISCHE PATENTANMELDUNG

(11) **EP 3 023 250 A1**
(43) Veröffentlichungstag der Anmeldung: **25.05.2016**
(21) Anmeldenummer: 15195338.7
(22) Anmeldetag: 19.11.2015
(51) Int. Cl.: B32B 29/00, E04B 1/94, B32B 5/02, B32B 5/22, B32B 5/24, B32B 19/00, B32B 19/04, B32B 19/06, B32B 29/02

(54) **BAUSTOFFPLATTE MIT DEKORATIVER SCHICHT**

(30) Priorität: 20.11.2014 DE 202014105592 U
(71) Anmelder: Holzbau Schmid GmbH & Co. KG, 73099 Adelberg (DE); DEKODUR GmbH & Co. KG, 69434 Hirschhorn/Neckar (DE)
(72) Erfinder: SCHEMBECKER, Andreas, 73035 Göppingen (DE); SCHMID, Claus, 73099 Adelberg (DE); ANDRÉ, Volkmar, 69434 Hirschhorn (DE); HELD, Holger, 64711 Erbach im Odenwald (DE)
(74) Vertreter: Ring & Weisbrodt

(57) **Zusammenfassung**

Die vorliegende Erfindung betrifft eine Baustoffplatte (1) mit einer zwei gegenüberliegende Hauptflächen aufweisenden mineralischen, nicht brennbaren Grundplatte (2) aus einem silikatischen Material und wenigstens einer auf zumindest eine der Hauptflächen aufgeklebten nicht brennbaren Dekorschicht (4), wobei die Dekorschicht (4) wenigstens eine Verstärkungsschicht (5), eine Papierlage (6) und eine auf der Papierlage (6) aufgebrachte Deckschicht (7) umfasst und die Dekorschicht (4) mit ihrer der Deckschicht (7) abgewandten Fläche auf die Grundplatte (2) aufgeklebt ist.

## Beschreibung

Die Erfindung betrifft eine Baustoffplatte mit einer zwei gegenüberliegende Hauptflächen aufweisenden mineralischen, nicht brennbaren Grundplatte aus einem silikatischen Material und wenigstens einer auf zumindest einer der Hauptflächen aufgeklebten Dekorschicht, wobei die Dekorschicht wenigstens eine Verstärkungsschicht, eine Papierlage und eine auf der Papierlage aufgebrachte Deckschicht umfasst und die Dekorschicht mit ihrer der Deckschicht abgewandten Fläche auf die Grundplatte aufgeklebt ist. Die Erfindung betrifft ferner ein Verfahren zur Herstellung einer solchen Baustoffplatte sowie die Verwendung einer derartigen Baustoffplatte zum Brandschutz.

Aus dem Stand der Technik sind Baustoffplatten mit einer dekorativen Oberflächenbeschichtung grundsätzlich bekannt. Als dekorative Oberflächenbeschichtung beziehungsweise Dekorschicht werden unterschiedliche Materialien verwendet, beispielsweise eine Furnierholzschicht oder ein Schichtstoff. Unter einem Schichtstoff versteht man in der Regel ein mehrschichtiges Laminat aus in Phenolharz getränkten Papierschichten, die unter Hochdruck bei erhöhten Temperaturen zusammengefügt werden. Dabei ist häufig die oberste Papierschicht mit einem aufgedruckten Motiv versehen, wie beispielsweise ein Holz- oder Gesteinsmuster. Die oberste Papierschicht ist in der Regel zudem mit einem transparenten Overlay zum Schutz vor mechanischer Einwirkung abgedeckt. Schichtstoffe sind beispielsweise als HPL-Schichtstoffe (High Pressure Laminates) oder als CPL-Schichtstoffe (Continuous Pressing Laminates) im Handel erhältlich. Eine Baustoffplatte mit einem solchen Schichtstoff ist beispielsweise aus DE 196 29 968 A1 bekannt. Diese weist eine Grundplatte aus Sperrholz auf, welche beidseitig mit Metallplatten sandwichartig beschichtet ist, wobei zusätzlich auf einer der Metallplatten ein Schichtstoff aus Papier und Phenolharz aufgebracht ist. Bei einer solchen Baustoffplatte ist nachteilig, dass diese für Brandschutzzwecke nicht geeignet ist, da das metallbeplankte Sperrholz keine ausreichende Brandschutzwirkung besitzt und zudem der Schichtstoff unter Umständen brennbar ist.

Aus der DE 601 17 344 T2 ist eine feuerfeste Komposit-Paneele bekannt. Diese besteht aus einer Substratschicht in Form eines Bleches, auf das eine mit einem anorganischen Füllstoff versehene Harz-Zusammensetzung aufgebracht ist, die wiederum mit einer dekorativen Deckschicht versehen ist. Als anorganischer Füllstoff kommt Löss zum Einsatz. Als Harz-Zusammensetzung wird ein Phenolharz oder Melaminharz verwendet. Da die Harz-Zusammensetzung etwa 50 bis 80 Gew.-% Löss beinhaltet, weisen die hieraus hergestellten Baustoffplatten ein verhältnismäßig hohes spezifisches Gewicht auf. Dies bringt nicht nur Nachteile beim Transport und der Anbringung mit sich, sondern kann auch insofern problematisch sein, als solche Platten wegen ihres hohen Eigengewichts zum Durchhängen neigen, wodurch Risse in der Harz-Schicht entstehen können.

Der vorliegenden Erfindung liegt die Aufgabe zugrunde, eine Baustoffplatte zur Verfügung zu stellen, die einerseits Brandschutzeigenschaften besitzt und den Anforderungen der Baustoffklassen A1 oder A2 gemäß DIN 4102-1 (Mai 1998) und der Klassifizierungsnorm EN 13501 genügt und mit der sich andererseits optisch ansprechende Verkleidungen, wie beispielsweise eine Wandverkleidung realisieren lassen.

Diese Aufgabe wird erfindungsgemäß **gelöst** durch eine Baustoffplatte mit einer zwei gegenüberliegenden Hauptflächen aufweisenden mineralischen, nicht brennbaren Grundplatte aus einem silikatischen Material und wenigstens einer auf zumindest einer der Hauptflächen aufgeklebten nicht brennbaren Dekorschicht, wobei die Dekorschicht wenigstens eine Verstärkungsschicht, eine Papierlage und eine auf der Papierlage aufgebrachte Deckschicht umfasst und die Dekorschicht mit ihrer der Deckschicht abgewandten Fläche auf die Grundplatte aufgeklebt ist.

Der vorliegenden Erfindung liegt die Erkenntnis zugrunde, dass im Unterschied zu den typischerweise für Baustoffplatten eingesetzten Schichtstoffen auf Papier- / Phenolharzbasis die erfindungsgemäße Dekorschicht aus zumindest einer Papierlage und einer Verstärkungsschicht, wie beispielsweise einem Glasfaservlies, aufgrund des sich daraus ergebenden niedrigeren Papiergehaltes zu deutlich verbessertem Brandschutzverhalten führt. In Kombination mit der Grundplatte aus silikatischem Material kann nicht nur eine Baustoffplatte mit gutem Brandverhalten zur Verfügung gestellt werden, sondern zusätzlich auch eine vergleichsweise leichte Bauweise erzielt werden, was Vorteile im Hinblick auf den Transport und die Montage mit sich bringt. Zudem kann sich die Verstärkungsschicht der Dekorschicht auch positiv auf die Stabilität der gesamten Baustoffplatte auswirken. Weiterhin hängen erfindungsgemäße Platten aufgrund ihres geringeren Eigengewichts im Vergleich zu aus dem Stand der Technik bekannten Platten mit einem Kern aus Löss gefülltem Harz weniger durch. Deshalb können die erfindungsgemäßen Baustoffplatten im Hinblick auf ihre Breite und Länge größer dimensioniert werden. Durch den Einsatz einer Grundplatte aus silikatischem Material kann die Grundplatte beispielsweise eine Dichte von lediglich 800 kg/m³ oder weniger aufweisen, insbesondere 700 kg/m³ oder weniger.

Erfindungsgemäß ist vorgesehen, dass die Grundplatte ein silikatisches Material umfasst oder aus diesem besteht. Das silikatische Material kann hierbei auch in Kombination mit Gips oder anderen anorganischen Füllstoffen und / oder Fasermaterialien kombiniert werden. Als Fasermaterialien kommen neben anorganischen Fasern aus Glas, Kohlenstoff oder Aluminiumoxid auch organische Fasern wie Cellulosefasern oder Aramidfasern in Betracht.

Ob und in welchem Maße dem silikatischen Material der Grundplatte Gips zugegeben wird, hängt von dem Anwendungszweck der Baustoffplatte ab. Generell werden durch den Zusatz von Gips die Brandschutzeigenschaften einer solchen Baustoffplatte im Brandfall insofern verbessert, dass das im Gips gebundene Kristallwasser im Brandfall verdampft und hierdurch die Brandgegenseite der Platte gekühlt wird. Andererseits erhöht der Gipszuschlag das spezifische Gewicht der Platte, reduziert ihre Feuchtigkeitstoleranz und die Stabilität. Der Gipsanteil kann demnach an die gewünschten Brandschutzeigenschaften angepasst werden.

Nach einer bevorzugten Ausführungsform der erfindungsgemäßen Baustoffplatte enthält das silikatische Material Perlite oder besteht hieraus. Dies ist von Vorteil, weil Perlite einerseits ein sehr geringes spezifisches Gewicht und gleichzeitig gute Wärmedämmeigenschaften sowie ein gutes Brandschutzverhalten besitzen.

Nach einer bevorzugten Ausführungsform der erfindungsgemäßen Baustoffplatte weist die Grundplatte eine Dichte von 800 kg/m³ oder weniger auf, insbesondere 700 kg/m³ oder weniger, bevorzugt 650 kg/m³ oder weniger, besonders bevorzugt 450 kg/m³ oder weniger. Mit solchen Platten lassen sich Baustoffplatten herstellen, deren spezifisches Gewicht in etwa demjenigen solcher Platten entspricht, die einen Pressspankern besitzen, also etwa zwischen 600 bis 900 kg/m³. Die erfindungsgemäßen Baustoffplatten zeichnen sich jedoch gegenüber Platten mit Pressspankern durch ihre Nichtbrennbarkeit aus. Außerdem entstehen im Brandfall durch den mineralischen Kern der erfindungsgemäßen Baustoffplatten weder Rauch noch gesundheitsschädliche Dämpfe.

Nach einer weiteren bevorzugten Ausführungsform der erfindungsgemäßen Baustoffplatte ist die Grundplatte durch Verpressen des silikatischen Materials hergestellt. Das bedeutet, dass abgesehen von dem silikatischen Material sowie optional weiteren anorganischen Füllstoffen und/oder Fasermaterialien kein zusätzliches Bindemittel eingesetzt werden muss, sondern dass die Platte durch Verpressen der trockenen Einsatzstoffe erzeugt wird. Ein anschließendes Sintern ist ebenfalls nicht erforderlich. Durch den Verzicht auf Bindemittel, insbesondere organische Bindemittel wie Harze oder Klebstoffe, werden nicht nur die Brandschutzeigenschaften der Grundplatte verbessert, sondern auch das spezifische Gewicht der Platte niedrig gehalten.

Nach einer bevorzugten Ausführungsform der erfindungsgemäßen Baustoffplatte ist die Dekorschicht mit einem Wasserglaskleber auf die Grundplatte aufgeklebt. Dabei ist es besonders vorteilhaft, die Verklebung bei leicht erhöhter Temperatur, beispielsweise im Bereich von 30 bis 70 °C durchzuführen, insbesondere bei 30 bis 60 °C. Durch die Verwendung eines Wasserglasklebers ist es möglich, die Dekorschicht unmittelbar auf die Grundplatte aufzukleben. Dadurch ist die Verwendung von metallischen Zwischenschichten, wie sie zum Teil aus dem Stand der Technik bekannt sind, ebenso wenig erforderlich wie die Verwendung eines Primers beziehungsweise eines Haftvermittlers. Der eingesetzte Wasserglaskleber hat darüber hinaus im Vergleich zu den aus dem Stand der Technik bekannten Epoxid- oder Polyurethan-Klebstoffen den weiteren Vorteil, nicht brennbar zu sein und im Brandfall auch keinen Rauch oder giftige Gase zu entwickeln. Darüber hinaus weist der bevorzugt eingesetzte Klebstoff auf Wasserglasbasis im Brandfall kühlende Eigenschaften durch Abspaltung von Wasser auf, wodurch die Brandschutzeigenschaften der Baustoffplatte weiter verbessert werden. Ein geeigneter Wasserglaskleber ist beispielsweise im Handel unter der Bezeichnung COLLOSIL® von der Firma Woellner erhältlich.

In Weiterbildung der erfindungsgemäßen Baustoffplatte umfasst die Deckschicht ein Melaminharz oder besteht hieraus. Dies ist von Vorteil, da Melaminharz im Vergleich zu den für Baustoffplatten häufig eingesetzten Phenol-Formaldehydharzen ein günstigeres Brandverhalten zeigt. Zur weiteren Verbesserung der Brandschutzeigenschaften kann die Deckschicht darüber hinaus noch ein Flammschutzmittel enthalten und/oder hiermit ausgerüstet sein. Dazu kann ein hierfür geeignetes Flammschutzmittel in das Material der Deckschicht integriert und/oder die Deckschicht hiermit ausgerüstet sein. Geeignete Flammschutzmittel sind beispielsweise polybromierte Diphenylether (PentaBDE, OctaBDE, DecaBDE), TBBPA und HBCD, Melamin, Harnstoff, APP (Ammoniumpolyphosphat), TCEP (Tris(chlorethyl)phosphat), TCPP (Tris(chlorpropyl)phosphat), TDCPP (Tris(dichlorisopropyl)phosphat), TPP (Triphenylphosphat), TEHP (Tris-(2-ethylhexyl)phosphat), TKP (Trikresylphosphat), ITP ("Isopropyliertes Triphenylphosphat") Mono-, Bis- und Tris(isopropylphenyl)phosphate unterschiedlichen Isopropylierungsgrades, RDP (Resorcinol-bis(diphenylphosphat)), BDP (Bisphenol-A-bis(diphenylphosphat)), ATH (Aluminiumhydroxid), MDH (Magnesiumhydroxid), Ammoniumsulfat ((NH₄)₂SO₄) und -phosphat ((NH₄)₂PO₄).

Im Rahmen der vorliegenden Erfindung kann die Verstärkungsschicht ein flächiges Fasergebilde umfassen oder daraus bestehen. Prinzipiell können hierfür sämtliche Arten von Fasern verwendet werden, die dem Fachmann zur Verstärkung von Dekorschichten bekannt sind. Dies sind beispielsweise Fasern aus Quarz, Glas, Kohlenstoff, Aramid oder anderen schwerbrennbaren Kunststoffen, Fasern aus Aluminiumoxid oder anderen anorganischen Materialien oder Mischungen hiervon. Die Fasergebilde können gewebt oder ungewebt sein und beispielsweise als Vlies, Gewebe und / oder Gelege zum Einsatz kommen. Besonders bevorzugt umfasst die Verstärkungsschicht ein Glaserfaservlies, Gewebe und / oder Gelege oder besteht aus den vorgenannten Fasergebilden, vorzugsweise in Form eines schwerentflammbaren, mit schwerentflammbaren Füllstoffen ausgerüsteten und mit Melaminharz imprägnierten Glasfaservlieses. Es können auch zwei, drei oder mehr Verstärkungsschichten verwendet werden.

Nach einer weiteren Ausführungsform der erfindungsgemäßen Baustoffplatte ist die Verstärkungsschicht zwischen zwei Papierlagen angeordnet, wobei die Papierlage vorzugsweise ein mit einem wässrigen Melaminharz imprägniertes Zellulosepapier ist. Hierdurch kann beispielsweise ein Ausfransen an der Verstärkungsschicht verhindert werden. In einer weiteren Ausgestaltung der erfindungsgemäßen Baustoffplatte ist zumindest die mit der Deckschicht versehene Papierlage bedruckt, eingefärbt und/oder strukturiert. Auf diese Weise kann der Baustoffplatte nahezu jede mögliche optische Gestaltung verliehen werden. Das Bedrucken kann beispielsweise über ein Siebdruckverfahren erfolgen. Zur Erzeugung einer Oberflächenstrukturierung können dem Fachmann hierfür an sich bekannte Prägetechniken zum Einsatz kommen.

Nach einer weiteren bevorzugten Ausführungsform der erfindungsgemäßen Baustoffplatte sind die Verstärkungsschicht und die Papierlage(n) mit einem Melaminharz verklebt. Dem Melaminharz können zusätzlich Füllstoffe zugesetzt sein, insbesondere anorganische Füllstoffe wie Gips, Kreide oder dergleichen sowie Mischungen von diesen.

Die Maße der Baustoffplatte können in weiten Bereichen den jeweiligen Anforderungen angepasst werden.

Die Stoßkanten der Baustoffplatte können mit einem umlaufenden Kantenschutz abgedeckt sein.

Die erfindungsgemäße Baustoffplatte zeichnet sich dadurch aus, dass sie die Anforderungen der Baustoffklasse A1 oder A2 gemäß DIN 4102-1 (Mai 1998) Abschnitt 5 erfüllt. Dies gilt insbesondere bei Verwendung von Melaminharz als Deckschicht und Harz für die Dekorschicht sowie einem Wasserglaskleber zum Verkleben der Dekorschicht auf der Grundplatte.

Die Baustoffplatte kann beispielsweise als Wand, Trennwand oder Decke beziehungsweise zu deren Verkleidung verwendet werden. Ebenso können hieraus Revisionsschächte und -klappen erzeugt werden. Weitere Anwendungsgebiete sind die Fluchtwegesicherung, der Einsatz in öffentlichen Gebäuden, Konzertsälen, Theatern, Flughäfen, Bahnhöfen, Stadien sowie auch im Schiffsbau.

Ein weiterer Gegenstand der vorliegenden Erfindung betrifft ein Verfahren zur Herstellung einer Baustoffplatte, bei dem eine zwei gegenüberliegende Hauptflächen aufweisende mineralische, nicht brennbare Grundplatte aus einem silikatischen Material wenigstens auf einer Hauptfläche mit wenigstens einer Dekorschicht verklebt wird, wobei die Dekorschicht wenigstens eine Verstärkungsschicht, eine Papierlage und eine auf der Papierlage aufgebrachte Deckschicht umfasst und die Dekorschicht mit ihrer der Deckschicht abgewandten Fläche auf die Grundplatte aufgeklebt wird

Die Herstellung der Verstärkungsschicht kann beispielsweise derart erfolgen, dass die Papierschicht beziehungsweise die Papierschichten in eine Harzmatrix getaucht werden, insbesondere in ein Melaminharz. Gleichermaßen wird auch die Verstärkungsschicht mit dem Harzmaterial getränkt. Anschließend werden die Schichten wechselweise auf eine antihaftbeschichtete Oberfläche oder einen Release-Liner, wie ein Silikonpapier, gelegt, mit einem Release-Liner abgedeckt und in einer Laminierpresse bei erhöhter Temperatur miteinander verpresst. Als Presstemperatur, Pressendruck und Pressdauer können die dem Fachmann zur Herstellung von HPL-Schichtstoffen geläufigen Temperaturen, Drücke und Pressdauern eingestellt werden.

Die Erfindung wird im Folgenden anhand der Figuren und Ausführungsbeispiele näher erläutert. Dabei zeigen
- Fig. 1: eine erfindungsgemäße Baustoffplatte in seitlicher Schnittdarstellung; und
- Fig. 2: eine weitere Ausgestaltung einer erfindungsgemäßen Baustoffplatte in seitlicher Schnittdarstellung.

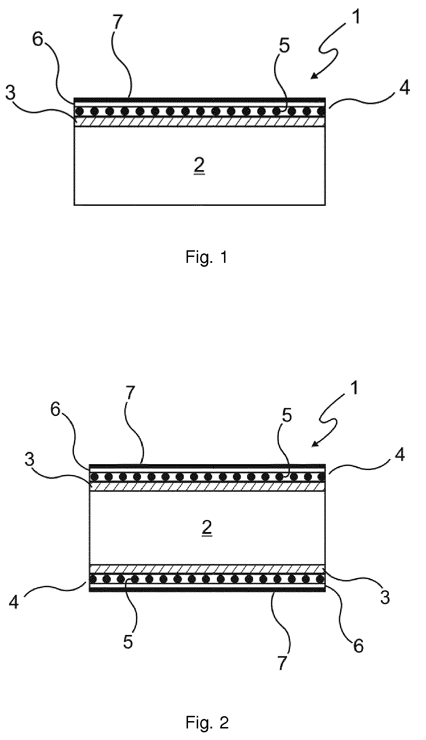

In Fig. 1 ist eine erfindungsgemäße Baustoffplatte 1 in seitlicher Schnittdarstellung abgebildet. Die Baustoffplatte 1 setzt sich aus einer Grundplatte 2 aus einem gepressten silikatischen Material unter Verwendung von Kalk, Vermiculite, Sand, Glimmer, Wasser und Zuschlagstoffen zusammen, auf die mittels eines lösungsmittelfreien anorganischen Klebers 3 eine Dekorschicht 4 aufgeklebt ist. Die Dekorschicht 4 besteht aus einer Verstärkungsschicht 5 in Form eines Glasfasergewebes und einer bedruckten Papierlage 6, die mittels eines Melaminharzes aufeinander laminiert sind. Auf der der Grundplatte 2 abgewandten Hauptfläche der Deckschicht 4 ist die Papierlage 6 mit einer Deckschicht 7 aus Melaminharz abgedeckt.

In einem zweiten Ausführungsbeispiel gemäß Fig. 2 ist eine erfindungsgemäße Baustoffplatte 1 in seitlicher Schnittdarstellung abgebildet. Dabei setzt sich die Baustoffplatte 1 aus einer Grundplatte 2 aus einem gepressten silikatischen Material und darauf beidseitig mittels eines lösungsmittelfreien silikatischen Klebers 3 aufgebrachten Dekorschichten 4 zusammen. Die Dekorschichten 4 bestehen jeweils aus einer Verstärkungsschicht 5, aus einer bedruckten und/oder gefärbten Papierlage 6 oder alternativ einen Holzfurnier und einer darauf angebrachten Deckschicht 7 aus Melaminharz. Die Verwendung einer gemäß diesem Ausführungsbeispiel ausgebildeten Baustoffplatte 1 ist insbesondere vorteilhaft, falls beide Oberflächen der Baustoffplatte 1 in exponierter Lage betrachtbar sind.

### BezuGszeichenliste

- 1: Baustoffplatte
- 2: Grundplatte
- 3: Wasserglaskleber
- 4: Dekorschicht
- 5: Verstärkungsschicht
- 6: Papierlage
- 7: Deckschicht

## Patentansprüche

1. Baustoffplatte (1) mit einer zwei gegenüberliegende Hauptflächen aufweisenden mineralischen, nicht brennbaren Grundplatte (2) aus einem silikatischen Material und wenigstens einer auf zumindest eine der Hauptflächen aufgeklebten nicht brennbaren Dekorschicht (4), wobei die Dekorschicht (4) wenigstens eine Verstärkungsschicht (5), eine Papierlage (6) und eine auf der Papierlage (6) aufgebrachte Deckschicht (7) umfasst und die Dekorschicht (4) mit ihrer der Deckschicht (7) abgewandten Fläche auf die Grundplatte (2) aufgeklebt ist.

2. Baustoffplatte nach Anspruch 1,
**dadurch gekennzeichnet, dass**
die Grundplatte (2) aus einem silikatischen Material, vorzugsweise in Kombination mit Gips und/ oder einem Fasermaterial (Cellulosefasern) besteht.

3. Baustoffplatte nach Anspruch 1 oder 2,
**dadurch gekennzeichnet, dass**
das silikatische Material Perlite enthält oder daraus besteht.

4. Baustoffplatte nach einem der vorstehenden Ansprüche,
**dadurch gekennzeichnet, dass**
die Grundplatte (2) eine Dichte von 800 kg/m³ oder weniger aufweist, insbesondere 700 kg/m³ oder weniger.

5. Baustoffplatte nach einem der vorstehenden Ansprüche,
**dadurch gekennzeichnet, dass**
die Grundplatte (2) durch Verpressen des silikatischen Materials hergestellt ist.

6. Baustoffplatte nach einem der vorstehenden Ansprüche,
**dadurch gekennzeichnet, dass**
die Dekorschicht (4) mit einem lösungsmittelfreien, anorganischen Klebstoff auf die Grundplatte aufgeklebt ist.

7. Baustoffplatte nach einem der vorstehenden Ansprüche,
**dadurch gekennzeichnet, dass**
die Dekorschicht (4) unmittelbar auf die Grundplatte (2) aufgeklebt ist.

8. Baustoffplatte nach einem der vorstehenden Ansprüche,
**dadurch gekennzeichnet, dass**
die Deckschicht (7) ein Melaminharz umfasst oder daraus besteht, wobei die Deckschicht (7) vorzugsweise ein Flammschutzmittel enthält und/oder hiermit ausgerüstet ist.

9. Baustoffplatte nach einem der vorstehenden Ansprüche,
**dadurch gekennzeichnet, dass**
die Verstärkungsschicht (5) ein flächiges Fasergebilde umfasst oder daraus besteht, insbesondere ein Glasfaservlies, -gewebe und/ oder -gelege, vorzugsweise in Form eines schwerentflammbaren, mit schwerentflammbaren Füllstoffen ausgerüsteten und mit Melaminharz imprägnierten Glasfaservlieses.

10. Baustoffplatte nach einem der vorstehenden Ansprüche,
**dadurch gekennzeichnet, dass**
die Verstärkungsschicht (5) zwischen zwei Papierlagen (6) angeordnet ist, wobei eine Papierlage (6)vorzugsweise ein mit einem wässrigen Melaminharz imprägniertes Zellulosepapier ist.

11. Baustoffplatte nach einem der vorstehenden Ansprüche,
**dadurch gekennzeichnet, dass**
zumindest die mit der Deckschicht (7) versehene Papierlage (6) bedruckt, eingefärbt und/oder strukturiert ist.

12. Baustoffplatte nach einem der vorstehenden Ansprüche,
**dadurch gekennzeichnet, dass**
anstelle der Papierlage (6) ein Holzfurnier zwischen der Verstärkungsschicht (5) und der Deckschicht (7) angeordnet ist.

13. Baustoffplatte nach einem der vorstehenden Ansprüche,
**dadurch gekennzeichnet, dass**
die Verstärkungsschicht (5) und die Papierlage(n) (6) mit einem Melaminharz verklebt sind, wobei das Melaminharz vorzugsweise Füllstoffe enthält, insbesondere anorganische Füllstoffe wie Gips, Kreide oder Mischungen von diesen.

14. Baustoffplatte nach einem der vorstehenden Ansprüche,
**dadurch gekennzeichnet, dass**
die Baustoffplatte die Anforderungen der Baustoffklasse A1 oder A2 gemäß DIN 4102-1 (Mai 1998) Abschnitt 5 erfüllt.
